Europäisches Patentamt

**European Patent Office**

Office européen des brevets

(11) Publication number: **0 257 996 B1**

## EUROPEAN PATENT SPECIFICATION

(45) Date of publication of patent specification: **31.05.95**  (51) Int. Cl.⁶: **A23K 1/165**, A23K 1/00

(21) Application number: **87307390.2**

(22) Date of filing: **21.08.87**

(54) **Feed premix and production method therefor.**

(30) Priority: **22.08.86 FI 863393**

(43) Date of publication of application:
**02.03.88 Bulletin 88/09**

(45) Publication of the grant of the patent:
**31.05.95 Bulletin 95/22**

(84) Designated Contracting States:
**AT BE CH DE ES FR GB GR IT LI LU NL SE**

(56) References cited:
EP-A- 0 105 051          EP-A- 0 113 626
AU-A- 548 773            GB-A- 644 988
US-A- 3 701 830          US-A- 3 898 131
US-A- 4 218 437

POULTRY SCIENCE, vol. 65, no. 1, 1986,
pages 72-77, Champaign, US; M.J. EDNEY et
al.: "Application of a simple radial gel diffu-
sion assay for endo-beta-glucanase activity
in dietary enzyme supplements"

ARCHIV FÜR GEFLÜGELKUNDE, vol. 42, no. 5,
1978, pages 183-193, Eugen Ulmer GmbH &
Co., Stuttgart, DE; H. VOGT et al.: "Proteasen
im Geflügelfutter"

(73) Proprietor: **Cultor Ltd.**
**Kyllikinportti 2**
**SF-00240 Helsinki (FI)**

(72) Inventor: **Haarakilta, Asko**
**Lansituulentie 7**
**Espoo (FI)**
Inventor: **Riikonen, Pirkko**
**Lansituulentie 7**
**Espoo (FI)**
Inventor: **Vuorenlinna, Leo**
**Lansituulentie 7**
**Espoo (FI)**

(74) Representative: **Jones, Ian et al**
**W.P. THOMPSON & CO.**
**Celcon House**
**289-293 High Holborn**
**London WC1V 7HU (GB)**

**Description**

This invention relates to a feed enzyme premix and to a method for producing such a premix.

The use of enzymes to treat animal feed mixes is well known. The treatment of animal feeds with enzymes can improve the digestibility of the feed and hence make the feed more efficient and increase its energy content. For example, US-A-2,988,949 and US-A-2,988,448 (Hollenbeck) describe the treatment of raw barley feed with barley malt containing cytolytic enzymes; it is reported that poultry fed with the treated feed showed improved growth rate because of the increased energy value of the feed. In general, enzymes act to break down feed products, thus increasing the availability of digestible components in the feed to the animal. Also, US-A-3,701,830 (Weinrich et al) suggests incorporation of protease enzyme in dry food, and AU-A-548,773 suggests a feed supplement comprising clay with additives including enzyme.

However, despite the numerous advantages enzymes have as feed additives, their use in feeds is limited by several drawbacks. One particular problem is the heat instability of most enzymes. The heated conditions under which most feed processing takes place inactivates any enzymes present. Elevated temperatures are a characteristic of modern feed processing techniques. In typical feed pelleting processes, the feed is usually "preconditioned" with steam for ten seconds to three minutes which elevates the temperature to about 70-80 °C. The preconditioning step is followed by pelleting of the feed which takes place at temperatures in the range of 80-85 °C. Other feed processing techniques involve longer "conditioning" and the feed is held at elevated temperatures (60-95 °C) for periods of five to three minutes. Moreover, the amounts of enzymes which need to be added are extremely small, which makes effective and uniform mixing a serious problem. The difficulty in utilizing enzymes as a feed ingredient is also exacerbated by the fact that most commercial enzyme products are "enzyme solutions" or in liquid form which are more difficult to mix than dry ingredients.

One possible solution to these problems is the utilization of pre-mix. Because ingredients such as antibiotics, vitamins, minerals and the like are added to the feed in small quantities, they cannot be added directly to the feed because uniform distribution would be impossible in the context of commercial feed production. A premix consisting of a carrier and active ingredients is generally utilized to introduce these "micro-ingredients" into the feed. US-A-4,218,437 (Hiller) discloses the use of a feed premix wherein the active ingredients consist of antibiotics in combination with certain enzymes. However, it is not disclosed or suggested that the premix discussed could be effectively and efficiently utilized in the large scale commercial production or feed.

Feed premixes - for effective utilization in commercial feed processing - must have certain properties including, inter alia, physical stability, non-interference with the chemical stability of the active product, and good flow and blending properties. To date, no such feed premix containing enzymes has been available for large scale use. US-A-3,898,131 (Hahn et al) suggests pelletization of a specific enzyme as part of a feed pre-mix, in connection with the treatment of bloat in ruminants, but takes no account of the requirements for effective use of such a pre-mix.

In sum, it has not been simple or cost effective to use enzymes as a feed additive on a large commercial scale.

The present invention accordingly provides a heat stable enzyme premix for animal feed in which the enzyme retains an effective level of activity during commercial feed processing, including pelleting, the premix having a water content of between 7% and 15%, preferably less than 10% by weight and consisting of a grain based carrier which is capable of absorbing an aqueous enzyme solution, and at least one enzyme absorbed onto the carrier.

The invention will thus be understood to permit provision of a feed enzyme premix which contains one or more enzymes and which can be utilized for commercial feed processing because it is relatively dry and thermally stable. The premix has a high enzyme activity which is not significantly affected by high temperature used in feed processing which typically range from about 70-95 °C. The premix can have good flow properties and can be easily and uniformly blended into a feed mixture to effectively improve the properties of the feed.

The invention also provides a method of producing a heat stable enzyme premix containing one or more enzymes which retain an effective level of activity during commercial feed pelleting processes, the method comprising the steps of mixing a carrier which is grain based and capable of absorbing an aqueous enzyme solution, with an aqueous enzyme solution for a period of time sufficient to absorb the enzyme or enzymes onto the carrier to form a carrier/enzyme complex, pelleting the carrier/enzyme complex, and drying the pelleted carrier/enzyme complex to a moisture content of between 7% and 15%, preferably less than 10% by weight.

It is an advantage of the present invention that it allows enzymes solutions to be used in place of dry products. enzymes solutions are generally cheaper than corresponding dry products contributing to the overall price efficiency of the instant method. This method produces an enzyme premix which is thermally stable and does not exhibit any significant degradation of the enzymes at feed processing temperatures.

It has been found that the stability of enzymes in feed processing is greatly increased by the preparation of an enzyme premix wherein the enzyme is absorbed onto a carrier consisting of flour or other similar material, and pelletized. The resulting thermally stable premix has good flow properties and can be easily blended into a feed mixture to final concentrations of about 0.01-0.5% by weight. The premix can be easily blended into feed in amounts of less than 5kg premix per ton of food. The carrier is preferably prepared from a suitable, natural starch-containing material such a grain or flour and typically the carrier may itself contain several active enzymes.

Pelletizing the enzyme/carrier improves the thermal stability of the active enzyme or enzyme ingredients present. Pelletization also makes it possible to dry the premix product to a water content of less than 10% by weight. Drying of the premix in the context of this invention does not significantly denature or deactivate the enzyme or enzymes present. The pelletized premix is easily dried by warm air at a temperature below 65°C, preferably below 45°C. The dried pellets can be crushed or milled before mixing with the final feed mixture.

The premix contains an enzyme and/or enzyme combinations which improve the qualities of the feed mixture. Such enzymes include, inter alia, starch hydrolyzing enzymes or amylases, cellulose hydrolyzing enzymes or cellulases, cellulose hydrolyzing enzymes or cellulases and hemicellulases, glucanases, lipases, proteinases and the like. In particular, suitable enzymes include cellulases from Thricoderma reesei or proteases from Bacillus subtilis, which are usually marketed as enzyme solutions, or dry products like the alfa-amylase prepared from Bacillus subtilis. The enzymes are generally present in a liquid form although dried enzyme product can also be utilized.

The carrier material can be any physiologically acceptable feed ingredient which is compatible with the active enzyme ingredients. The preferred carrier material is a suitable flour product which permits an enzyme solution to be mixed with the carrier without drying of the enzyme. If an enzyme solution is utilized, additional water does not generally need to be added prior to pelletization because the enzyme-water solution provides the required moisture. Of course, dry enzymes can also be added to the mixture, along with water, instead of or in addition to enzyme solutions.

Suitable carriers include starch containing flours, for example wheat, barley or other grain flour, which have water contents of less than about 15% by weight, with a preferable water content of about 12% to about 14%. The carrier generally comprises between about 40% to about 99% by weight of the premix with a preferable concentration between about 40% to about 90%. The enzyme or enzymes generally comprise about 1% to about 60% of the premix by weight, with a preferable content of about 10% to about 40%.

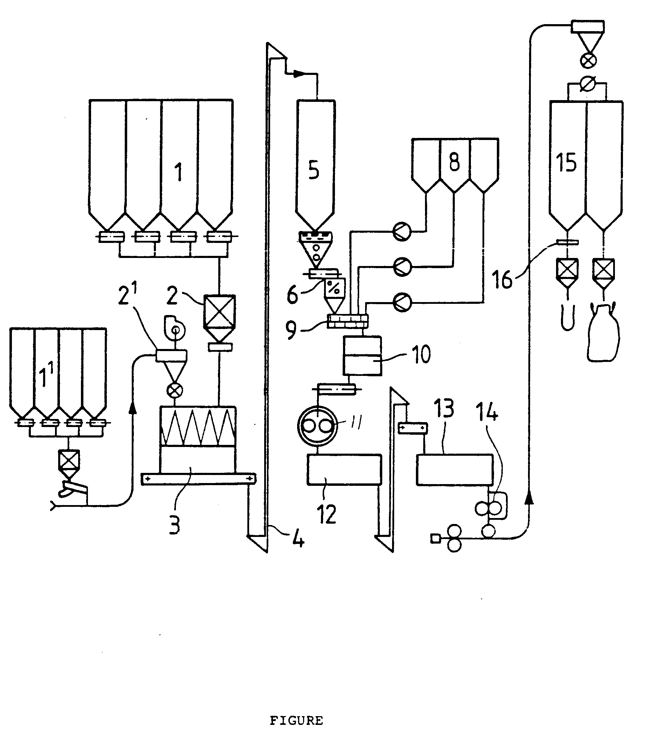

The invention is further described below, by way of example, with reference to the accompanying drawing, the single figure of which schematically depicts a preferred form of apparatus which can be used for large scale commercial production of an enzyme feed premix in accordance with the present invention.

The illustrated apparatus comprises an effective and efficient production line for the preparation of an enzyme premix. Carrier materials withdrawn from storage silos 1 and 1′ are weighed on balances 2 and 2′, and transferred to a mixer 3. A transporter 4 transfers the mixed carrier materials to a storage silo 5. From the storage silo 5, the carrier materials are transferred to a balance 6 and weighed together with dry enzyme products.

Enzyme solutions are stored in tanks 8 and are transferred in the appropriate amount or amounts to a mixer 9 for mixing. A suitable mixer is a continuous type mixer, for example, an Amandus Kahl "Durchlaufmischer Grosse Type 12 III" or similar device. Steam is supplied to the mixer 9 if necessary to increase the moisture content of the mix. From the mixer 9 the enzyme-carrier mixture is transferred to a reaction tank 10 where the enzymes are absorbed into the carrier material. A suitable reaction tank is an Amandus Kahl type LK 2210-2 tank or a similar device, which is equipped with an agitator. The mixture remains in the absorption tank 10 for 10-60 minutes, typically for approximately 30 minutes.

Thereafter the mixture is fed to a suitable pelletizing device 11 for example, an Amandus Kahl types 35-780 pelletizer (or similar collar-type device) where the material is pressed through a matrix and the formed stripes are cut into suitable pellets with a length of approximately 15 mm and diameter of about 5-8 mm. The moisture of the mass when arriving into the pelletizing machine is generally between about 18% and about 19% and the temperature is kept below about 60°C, preferably below about 45°C.

After pelletization the product is dried with warm air in a drying medium 12 such as an Amandus Kahl 275-04 band-drier or a similar drying device. Finally the product is cooled in a cooler 13 so that the final moisture content is approximately 8%. The dry, cool pellets can be milled or crushed in a crusher 14.

EP 0 257 996 B1

Oversize particles are returned from the crusher 14 and the product is transferred to storage silos 15. The product may be finally treated in a centrifugal machine 16 which disintegrates the particles and homogenizes the product. A suitable device for this purpose is the Simon Entoleter Standard IMP 590 "sentry impact infestation destroyer" or similar devices. The resulting product is ready for packaging and shipping.

The enzyme premix prepared by this method exhibits thermal stability and is free flowing, easy to handle and easily blended. The low moisture content of the premix of less than 10% by weight-contributes to these properties. In addition, the process outlined above results in a premix with a relatively high enzymatic activity, because the methods employed do not significantly affect the activity of the added enzyme.

Example 1

A premix intended for poultry feed was prepared from the following ingredients:

|                              | Weight % |
|------------------------------|----------|
| Wheat flour                  | 78.9     |
| alfa-amylase                 | 1.5      |
| Protease                     | 1.1      |
| Cellulase with beta glucanase | 18.5    |

The product was prepared according to the method depicted in the Figure and described above. This premix was relatively dry, stable and free flowing with a final moisture content of about 8%.

Examples 2-6 set forth various premix compositions which all were prepared on a commercial scale by the method depicted in the Figure and described above. All the carriers used in these examples contained water e.g., the wheat flour used contained between about 13% and about 14% water by weight.

Example 2

| Ingredients | Weight % | Weight % of final product |
|-------------|----------|----------------------------|
| Cellulase with beta-glucanase (solution)<br>Wheat flour | 40%<br>60% | 27.5% of dry substance<br>72.5% of dry substance |
| Water content of ingredients 27%<br>Water content of final product 9%<br>(% are all by weight) | | |

4

Example 3

| Ingredients | Weight % | Weight % of final product |
|---|---|---|
| Cellulase with beta-glucanase (solution) | 13.9% | 8.8% of dry substance |
| Neutral protease (solution) | 3.0% | 2.1% of dry substance |
| Glucoamylase (solution) | 4.4% | 1.7% of dry substance |
| Alfa-amylase (dry) | 1.3% | 1.6% of dry substance |
| Wheat flour | 77.4% | 85.6% of dry substance |
| Water content of ingredients 21%<br>Water content of product 9%<br>(% are all by weight) | | |

Example 4

| Ingredients | Weight % | Weight % of final product |
|---|---|---|
| Cellulase with beta-glucanase (solution) | 14.4% | 8.8% of dry substance |
| Cellobiose (solution) | 2.7% | 1.6% of dry substance |
| Xylanase (dry) | 0.9% | 1.1% of dry substance |
| Wheat flour | 82.0% | 88.5% of dry substance |
| Water content of ingredients 18%<br>Water content of product 9%<br>(% are all by weight) | | |

Example 5

| Ingredients | Weight % | Weight % of final product |
|---|---|---|
| Cellulase with beta-glucanase (solution) | 8.2% | 5.5% of dry substance |
| Cellobiose (solution) | 8.2% | 5.5% of dry substance |
| Neutral protease (solution) | 9.5% | 6.9% of dry substance |
| Acid protease (dry) | 7.0% | 9.3% of dry substance |
| Alfa-amylase (dry) | 2.5% | 3.3% of dry substance |
| Glycoamylase (solution) | 8.2% | 3.3% of dry substance |
| Wheat flour | 56.4% | 66.2% of dry substance |
| Water content of ingredients 5%<br>Water content of final product 9%<br>(% are all by weight) | | |

Example 6

| Ingredients | Weight % | Weight % of final product |
|---|---|---|
| Cellulase with beta-glucanase (solution) | 15.3% | 9.9% of dry substance |
| Neutral protease (solution) | 4.3% | 3.1% of dry substance |
| Alfa-amylase (solution) | 6.0% | 2.3% of dry substance |
| Wheat flour | 74.4% | 84.7% of dry substance |

Water content of ingredients 23%
Water content of product 9%
(% are all by weight)

The premixes of Examples 1-6 were relatively dry, thermally stable, had good flow properties, were easy to handle and can be simply and uniformly blended into a feed mix and can be prepared on a commercial scale according to the method aspect of this invention. Addition of the premixes to feed resulted in a final feed product with improved value and efficiency.

**Claims**

1. A heat stable enzyme premix for animal feed in which the enzyme retains an effective level of activity during commercial feed processing, including pelleting, the premix having a water content of between 7% and 15%, preferably less than 10% by weight and consisting of a grain based carrier which is physiologically acceptable capable of absorbing an aqueous enzyme solution, and at least one enzyme absorbed onto the carrier.

2. A premix as claimed in claim 1 wherein the or each enzyme is not inherently thermostable.

3. A premix as claimed in claim 2 wherein the or each enzyme is not inherently thermostable at temperatures above about 70°C.

4. A premix as claimed in claim 1, 2 or 3 wherein the or each enzyme is selected from starch hydrolyzing enzymes, amylases, cellulose hydrolyzing enzymes, cellulases, hemicellulases, glucanases, lipases, and proteases.

5. A premix as claimed in any preceding claim wherein the premix is pelletized.

6. A premix as claimed in any preceding claim wherein the carrier is a grain flour or a barley flour.

7. A premix as claimed in any preceding claim wherein the carrier comprises about 40% to about 99% of the premix by weight, and the enzyme or enzymes comprise between about 1% to about 60% by weight of the premix.

8. A method of producing a heat stable enzyme premix containing one or more enzymes which retain an effective level of activity during commercial feed pelleting processes, the method comprising the steps of:
   mixing a grain based carrier which is physiologically acceptable and capable of absorbing an aqueous enzyme solution, with an aqueous enzyme solution for a period of time sufficient to absorb the enzyme or enzymes onto the carrier to form a carrier/enzyme complex;
   pelleting the carrier/enzyme complex; and
   drying the pelleted carrier/enzyme complex to a moisture content of between 7% and 15%, preferably less than about 10% by weight.

9. A method as claimed in claim 8 wherein the drying step is carried out at temperatures of no higher than 65°C.

6

**10.** A method as claimed in claim 8 or 9 herein the pelletization step is carried out at temperatures of no more than 45°C.

**11.** A method as claimed in claim 9 or 10 wherein the or each enzyme is not inherently thermostable.

## Patentansprüche

**1.** Wärmestabile Enzymvormischung für Tierfutter, bei der das Enzym eine wirksame Menge an Aktivität bei kommerziellen Futterverarbeitungsabläufen einschließlich Pelletisierung behält, wobei die Vormischung einen Wassergehalt zwischen 7 und 15, vorzugsweise unter 10 Gew.-% aufweist und aus einem physiologisch akzeptablen Träger auf Getreidebasis, der in der Lage ist, eine wäßrige Enzymlösung zu absorbieren, und aus wenigstens einem auf den Träger absorbierten Enzym besteht.

**2.** Vormischung nach Anspruch 1, wobei das Enzym bzw. die Enzyme nicht inhärent thermostabil ist/sind.

**3.** Vormischung nach Anspruch 2, wobei das Enzym bzw. die Enzyme bei Temperaturen über etwa 70°C nicht inhärent thermostabil ist/sind.

**4.** Vormischung nach Anspruch 1, 2 oder 3, wobei das Enzym bzw. die Enzyme ausgewählt ist/sind aus stärkehydrolysierenden Enzymen, Amylasen, cellulosehydrolysierenden Enzymen, Cellulasen, Hemicellulasen, Glukanasen, Lipasen und Proteasen.

**5.** Vormischung nach einem der vorhergehenden Ansprüche, wobei die Vormischung pelletisiert ist.

**6.** Vormischung nach einem der vorhergehenden Ansprüche, wobei der Träger ein Getreidemehl oder ein Gerstenmehl ist.

**7.** Vormischung nach einem der vorhergehenden Ansprüche, wobei der Träger etwa 40 bis etwa 99 Gew.-% der Vormischung ausmacht und wobei das/die Enzym(e) etwa 1 bis etwa 60 Gew.-% der Vormischung ausmacht.

**8.** Verfahren zur Herstellung einer thermostabilen Enzymvormischung, die ein oder mehrere Enzyme enthält, das/die eine wirksame Menge an Aktivität bei kommerziellen Futterpelletisierungsprozessen behält, wobei das Verfahren die folgenden Schritte umfaßt:
Mischen eines physiologisch akzeptablen Trägers auf Getreidebasis, der in der Lage ist, eine wäßrige Enzymlösung zu absorbieren, mit einer wäßrigen Enzymlösung für einen Zeitraum, der ausreicht, um das Enzym bzw. die Enzyme zur Bildung eines Träger-Enzym-Komplexes auf den Träger zu absorbieren;
Pelletisieren des Träger-Enzym-Komplexes; und
Trocknen des pelletisierten Träger-Enzym-Komplexes auf einen Feuchtigkeitsgehalt zwischen 7 und 15, vozugsweise unter etwa 10 Gew.-%.

**9.** Verfahren nach Anspruch 8, wobei der Trocknungsschritt bei Temperaturen von maximal 65°C durchgeführt wird.

**10.** Verfahren nach Anspruch 8 oder 9, wobei der Pelletisierungsschritt bei Temperaturen von maximal 45°C durchgeführt wird.

**11.** Verfahren nach Anspruch 9 oder 10, wobei das Enzym bzw. die Enzyme nicht inhärent thermostabil ist/sind.

## Revendications

**1.** Prémélange d'enzyme stable à la chaleur pour l'alimentation des animaux, dans lequel l'enzyme retient un niveau effectif d'efficacité lors de la préparation alimentaire industrielle, comprenant la granulation, le prémélange présentant une teneur en eau située entre 7% et 15%, de préférence inférieure à 10% en poids et composé d'un porteur à base de grain qui soit physiologiquement acceptable et capable d'absorber une solution d'enzyme aqueuse, et au moins un enzyme absorbé par le porteur.

**2.** Prémélange selon la revendication 1, dans lequel le ou chaque enzyme n'est pas fondamentalement thermostable.

**3.** Prémélange selon la revendication 2, dans lequel le ou chaque enzyme n'est pas fondamentalement thermostable à des températures supérieures à 70°C environ.

**4.** Prémélange selon la revendication 1, 2 ou 3, dans lequel le ou chaque enzyme est sélectionné parmi des enzymes d'hydrolyse d'amidon, des amylases, des enzymes d'hydrolyse de cellulose, des cellulases, des hémicellulases*, des glucanases*, des lipases, et des protéases.

**5.** Prémélange selon l'une quelconque des revendications précédentes, dans lequel le prémélange est transformé en granulés.

**6.** Prémélange selon l'une quelconque des revendications précédentes, dans lequel le porteur est constitué d'une farine de céréale ou d'une farine d'orge.

**7.** Prémélange selon l'une quelconque des revendications précédentes, dans lequel le porteur comporte 40% environ à 99% environ du prémélange en poids, et l'enzyme ou les enzymes comportent entre 1% environ et 60% environ en poids du prémélange.

**8.** Procédé de production d'un prémélange d'enzyme stable à la chaleur contenant un ou des enzymes qui retiennent un niveau effectif d'efficacité lors des processus de granulation alimentaire industrielle, le procédé comportant les étapes suivantes:

mélanger un porteur à base de grain, qui soit physiologiquement acceptable et capable d'absorber une solution d'enzyme aqueuse, avec une solution d'enzyme aqueuse, pendant une durée suffisante pour absorber l'enzyme ou les enzymes dans le porteur pour former un complexe porteur/enzyme;

granuler le complexe porteur/enzyme; et

sécher le complexe porteur/enzyme à une teneur en eau située entre 7% et 15%, de préférence inférieure à 10% en poids environ.

**9.** Procécé selon le revendication 8, dans lequel l'étape de séchage est effectuée à des températures pas plus élevées que 65°C.

**10.** Procédé selon la revendication 8 ou 9, dans lequel l'étape de granulation est effectuée à des températures pas plus élevées que 45°C.

**11.** Procédé selon la revendication 9 ou 10, dans lequel le ou chaque enzyme n'est pas fondamentalement thermostable.

FIGURE